# DEMANDE DE BREVET EUROPEEN

(11) **EP 4 572 235 A1**
(43) Date de publication de la demande: **18.06.2025**
(21) Numéro de dépôt: 24219953.7
(22) Date de dépôt: 13.12.2024
(51) Int. Cl.: H04L 9/40

(54) **DISPOSITIF ÉLECTRONIQUE D'INTERFACE, PROCÉDÉ DE FILTRAGE ET PROGRAMME D'ORDINATEUR ASSOCIÉS**

(30) Priorité: 15.12.2023 FR 2314295
(71) Demandeur: THALES, 92190 Meudon (FR)
(72) Inventeur: Wiorek, Jean-François, 78140 VELIZY VILLACOUBLAY (FR); Anger, Augustin, 49309 CHOLET (FR)
(74) Mandataire: Lavoix

(57) **Abrégé**

Ce dispositif électronique d'interface (10) entre un premier réseau (12), obéissant à une première politique de labellisation, et un deuxième réseau (12), obéissant à une deuxième politique de labellisation, le dispositif (10) comprend :
- une première unité d'interface (16), comprenant un premier module de filtrage (22) des données en fonction de règles de filtrage définies selon la première politique de labellisation de données ;
- une deuxième unité d'interface (18), comprenant un deuxième module de filtrage des données en fonction de règles de filtrage définies selon la deuxième politique de labellisation de données ; et
- une unité de transposition (20), comprenant un module de transposition (26) étant configuré pour transposer un label associé aux données de l'une de la première ou deuxième politique de labellisation à l'autre de la première ou deuxième politique de labélisation.

## Description

La présente invention concerne un dispositif électronique d'interface entre un premier réseau, obéissant à une première politique de labellisation de données, et un deuxième réseau, obéissant à une deuxième politique de labellisation de données. L'invention concerne en outre un procédé de filtrage de données, entre de tels premier et deuxième réseaux, mis en oeuvre par un tel dispositif électronique d'interface. L'invention concerne par ailleurs un programme d'ordinateur comportant des instructions logicielles qui, lorsqu'elles sont exécutées par un ordinateur, mettent en oeuvre un tel procédé.

Dans le domaine des dispositifs électroniques d'interface, on connait des dispositifs assurant l'interface entre un premier réseau et un deuxième réseau ayant des contraintes de sécurité différentes. Par exemple, l'un des réseaux est apte à laisser transiter des données ayant un niveau de sensibilité donné alors que l'autre réseau n'est pas apte à laisser transiter des données ayant un tel niveau de sensibilité, et inversement.

Par ailleurs, afin d'assurer un contrôle approprié de l'accès à des données sensibles, une approche, connue sous le nom de DCS (de l'anglais « *Data Centric Security* ») a été développée au cours des dernières années. Dans cette approche, des labels sont associés aux données afin de caractériser la sensibilité des données directement au niveau des données et non seulement au niveau des supports sur lesquels transitent ces données. Il est alors possible de déterminer, directement par la donnée et par un label qui lui est associé, la sensibilité de la donnée.

L'association de labels à une donnée sous une approche DCS repose par exemple sur des fichiers SPIF (acronyme anglais de « *Security Policy Information File* », en français *« Fichier d'information de politique de sécurité* »), de tels fichiers étant par exemple des fichiers XML (acronyme anglais de *« Extensible Markup Language »,* en français *« Language de Balisage Extensible* ») caractérisant le niveau de sensibilité de données, exprimé selon un label d'une politique de sécurité déterminée.

La norme OTAN (acronyme de « *Organisation du traité de l'Atlantique Nord* ») STANAG 4778 (acronyme anglais de « *Standardization Agreement* », en français « *Accords de normalisation* ») vient par exemple définir les mécanismes d'association entre une donnée et son label au niveau OTAN. La norme OTAN STANAG 4774 vient quant à elle définir la syntaxe utilisée pour des labels permettant de caractériser la sensibilité d'une donnée au niveau de l'OTAN. On comprend ici qu'une sensibilité, ou un niveau de sensibilité, est défini par de multiples attributs, dont par exemple un attribut relatif à un niveau de confidentialité, un attribut relatif à une restriction géographique sur la diffusion de la donnée, un attribut relatif au caractère médical de la donnée, etc...

Ces ensembles d'attributs sont définis et normalisés au sein d'une politique de labélisation déterminée. Chaque politique de labélisation définit une pluralité de labels caractérisant la sensibilité d'une donnée. Comme vu plus haut, un exemple de politique labélisation est défini par la norme OTAN STANAG 4774 caractérisant par exemple les données par des labels tels que NATO Restricted, NATO confidential, NATO Secret, Cosmic Top Secret.. Un autre exemple de politique de labélisation est par exemple une politique propre à la défense nationale d'un état donné, caractérisant par exemple les données par des labels tels que : Non protégé, Diffusion restreinte, Secret, Très secret.

Afin de mieux contrôler la diffusion de données sensibles, on connait des dispositifs électroniques d'interface, aptes à filtrer les données entre un premier réseau et un deuxième réseau, en fonction d'un label associé à une donnée. Un tel dispositif électronique comprend par exemple une unité de filtrage, à l'interface entre le premier et le deuxième réseau, et apte à filtrer la donnée en fonction de règles de filtrages définie selon une politique de labélisation.

De tels dispositifs électroniques d'interface ne sont toutefois pas entièrement satisfaisant. En effet il est fréquent d'utiliser de multiples réseaux obéissant à des politiques de labélisation de données différentes, c'est-à-dire des réseaux pour lesquels les labels de données sont exprimées suivant de telles politiques différentes. Par exemple, un premier réseau obéit à une politique de labélisation OTAN tandis qu'un deuxième réseau obéit à une politique de labélisation propre à la défense nationale. En d'autres termes, et selon cet exemple, les labels contenus dans les fichiers SPIF associés aux données circulant dans le premier réseau sont exprimés conformément à une politique de labélisation OTAN tandis que les labels contenus dans les fichiers SPIF associés aux données circulant dans le deuxième réseau sont exprimés conformément à une politique de labélisation propre à la défense nationale.

En raison des différences entre les politiques de labélisation utilisées, ces dispositifs ne permettent pas d'assurer une entière conformité aux exigences de sensibilités des données échangées entre les réseaux, par rapport aux politiques existantes sur les réseaux sur lesquelles ces données circulent. Ces dispositifs ne permettent alors pas un contrôle satisfaisant de la diffusion de données sensibles

Un des buts de l'invention est alors d'obtenir un dispositif d'interface améliorant le contrôle de la diffusion de données sensibles.

A cet effet, l'invention a pour objet un dispositif électronique d'interface entre un premier réseau, obéissant à une première politique de labellisation de données, et un deuxième réseau, obéissant à une deuxième politique de labellisation de données, le dispositif comprenant :
- une première unité d'interface, configurée pour être connectée au premier réseau, la première unité d'interface comprenant un premier module de filtrage, configuré pour filtrer des données en fonction de règles de filtrage définies selon la première politique de labellisation de données ;
- une deuxième unité d'interface, configurée pour être connectée au deuxième réseau, la deuxième unité d'interface comprenant un deuxième module de filtrage configuré pour filtrer des données en fonction de règles de filtrage définies selon la deuxième politique de labellisation de données ; et
une unité de transposition, connectée à la première unité d'interface et à la deuxième unité d'interface, l'unité de transposition comprenant un module de transposition étant configuré pour transposer un label associé aux données transitant par l'unité de transposition entre la première et la deuxième unités d'interface, de l'une de la première ou deuxième politique de labellisation à l'autre de la première ou deuxième politique de labélisation.

L'utilisation d'une première et d'une deuxième unités de filtrage, chacune configurées pour filtrer des données en fonction règles de filtrage définies selon une première, respectivement deuxième, politique de labélisation de données, est particulièrement avantageuse, de telles unités de filtrage assurant un filtrage en entrée et en sortie du dispositif, selon les politiques propres aux différents réseaux auxquels est connecté le dispositif d'interface. Ceci améliore ainsi le contrôle de la diffusion de données sensibles.

Suivant d'autres aspects avantageux de l'invention, le dispositif électronique d'interface comprend une ou plusieurs des caractéristiques suivantes, prises isolément ou suivant toutes les combinaisons techniquement possibles :
- le premier module de filtrage est configuré pour bloquer une donnée si le label associé à la donnée n'est pas conforme aux règles de filtrage définies selon la première politique de labellisation de données et dans lequel le deuxième module de filtrage est configuré pour bloquer une donnée si le label associé à la donnée n'est pas conforme aux règles de filtrage définies selon la deuxième politique de labellisation de données ;
- le premier module de filtrage est configuré pour filtrer des données depuis le premier réseau vers l'unité de transposition et/ou depuis l'unité de transposition vers le premier réseau, et dans lequel le deuxième module de filtrage est configuré pour filtrer des données depuis l'unité de transposition vers le deuxième réseau et/ou depuis deuxième réseau vers l'unité de transposition

- le premier module de filtrage est configuré pour filtrer des données depuis le premier réseau vers l'unité de transposition en fonction d'un premier jeu de règles de filtrage définies selon la première politique de labélisation, et pour filtrer des données depuis l'unité de transposition vers le premier réseau en fonction d'un deuxième jeu de règles de filtrage définies selon la première politique de labélisation, lesdits premier et deuxième jeux de règles de filtrage étant différents,
   le deuxième module de filtrage étant configuré pour filtrer des données depuis l'unité de transposition vers le deuxième réseau en fonction d'un premier jeu de règles de filtrage définies selon la deuxième politique de labélisation, et pour filtrer des données depuis le deuxième réseau vers l'unité de transposition en fonction d'un deuxième jeu de règles de filtrage définies selon la deuxième politique de labélisation, lesdits premier et deuxième jeux de règles de filtrage étant différents
- l'unité de transposition comprend en outre un module de signature, configuré pour apposer une signature à la donnée et/ou au label transposé associé à la donnée ;
- l'unité de transposition comprend en outre un module de chiffrement, configuré pour chiffrer la donnée pour laquelle le label a été transposé ;
- l'unité de transposition comprend en outre un module de déchiffrement, configuré pour déchiffrer la donnée pour laquelle le module de transposition est configuré à transposer le label et/ou pour déchiffrer le label associé à ladite donnée ; et
- la première unité d'interface comprend une pluralité de premiers modules de filtrage et/ou dans lequel la deuxième unité d'interface comprend une pluralité de deuxièmes modules de filtrage.

L'invention concerne en outre un procédé de filtrage de données entre un premier réseau, obéissant à une première politique de labellisation de données, et un deuxième réseau, obéissant à une deuxième politique de labellisation de données, le procédé étant mis en oeuvre par un dispositif d'interface tel que précité et comprenant les étapes suivantes:
- filtrage, par le premier module de filtrage de la première unité d'interface, de données en fonction de règles de filtrage définies selon la première politique de labellisation de données ;
- filtrage, par le deuxième modules de filtrage de la deuxième unité d'interface, de données en fonction de règles de filtrage définies selon la deuxième politique de labellisation de données ; et
- transposition, par le module de transposition de l'unité de transposition, du label associé aux données transitant par l'unité de transposition entre la première et la deuxième unité d'interface, de l'une de la première ou deuxième politique de labellisation à l'autre de la première ou deuxième politique de labélisation.

L'invention concerne par ailleurs un programme d'ordinateur comportant des instructions logicielles qui, lorsqu'elles sont exécutées par un ordinateur, mettent en oeuvre un procédé de filtrage de données tel que précité.

L'invention sera mieux comprise à la lecture de la description qui va suivre, donnée uniquement à titre d'exemple non limitatif et faite en se référant aux figures suivantes, dans lesquelles :
- la figure 1 est une représentation schématique générale d'un dispositif électronique d'interface selon l'invention ; et

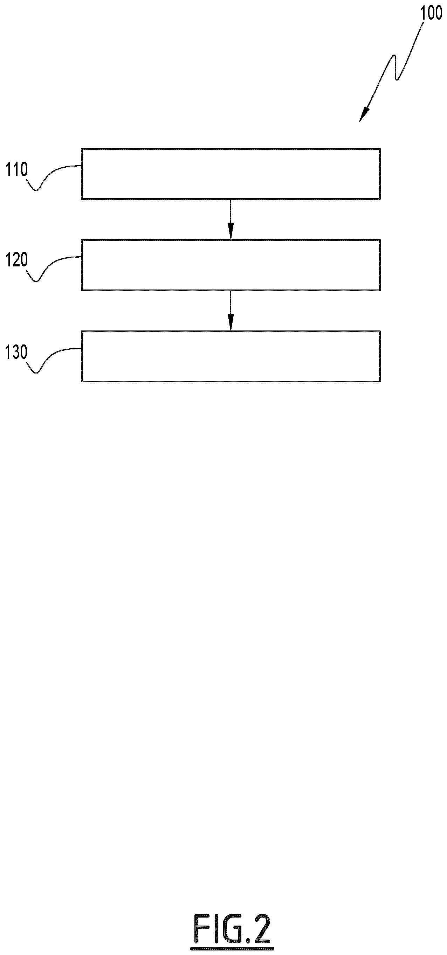

- la figure 2 est un organigramme représentatif d'un procédé de filtrage mis en oeuvre par le dispositif de la figure 1.

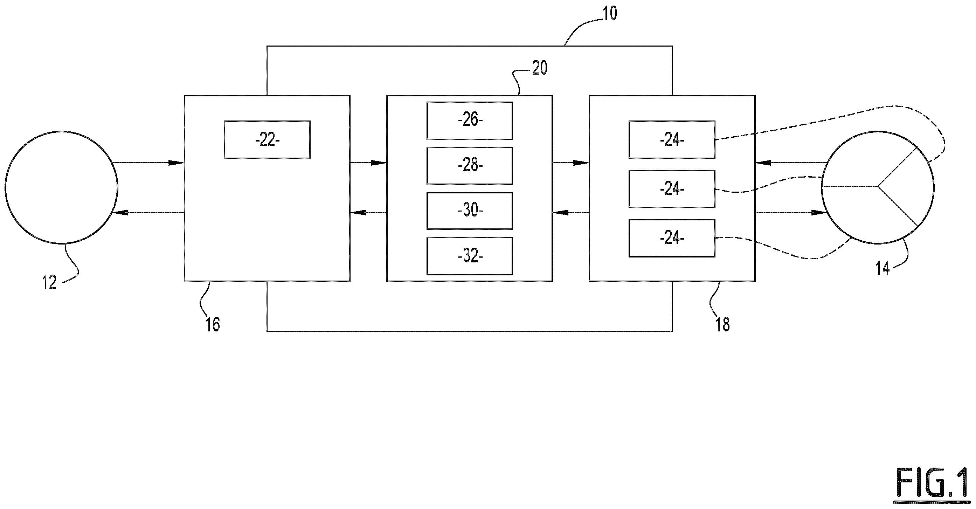

En référence à la figure 1, un dispositif électronique d'interface 10 est un dispositif d'interface entre un premier réseau 12 et un deuxième réseau 14, c'est-à-dire que le dispositif électronique d'interface 10 est configuré pour être connecté au premier réseau 12 et au deuxième réseau 14.

Le premier réseau 12 obéit à une première politique de labélisation de données P1 et le deuxième réseau 14 obéit à une deuxième politique P2 de labélisation de données. Comme cela sera présenté plus en détails par la suite, la première politique de sécurité P1 et la deuxième politique de sécurité P2 sont des politiques de sécurité distinctes.

Par obéir à une politique de sécurité P1, P2, on entend ici que des données D, transitant/hébergées sur le réseau 12, 14 et obéissant à la politique de sécurité, sont labélisées à l'aide d'un label L, selon ladite politique de sécurité P1, P2. Dans la suite de la description, on appelle une donnée labélisée DL une donnée D associée à un label L. Ainsi, et comme cela sera présenté plus en détails ultérieurement, les données labélisées DL transitant/hébergées par le premier réseau 12 comprennent un label L exprimé suivant une syntaxe définie par la première politique de labélisation P1 et les données labélisées DL transitant/hébergées par le deuxième réseau 14 comprennent un label L exprimé suivant une syntaxe définie par la deuxième politique de labélisation P2.

Les données labélisées DL sont par exemple sont par exemple des données D formées par un fichier de format quelconque, associées à un label contenu dans un fichier de caractérisation de la sensibilité de la donnée, un tel fichier étant par exemple un fichier XML (acronyme anglais de « *Extensible Markup Language* », en français « *Language de Balisage Extensible* ») et par exemple un fichier SPIF (acronyme anglais de « *Security Policy Information File* », en français « *Fichier d'information de politique de sécurité* »). Un tel fichier définit les attributs d'une politique de labélisation. Le label L contenu dans un tel fichier est alors conforme à la première politique de labélisation P1 pour les données circulant sur le premier réseau 12 et le label L contenu dans un tel fichier est alors conforme à la deuxième politique de labélisation P2 pour les données circulant sur le deuxième réseau 14.

La politique de labélisation P1, P2 est par exemple définie par la norme OTAN STANAG 4774 (politique de labélisation OTAN), vient traduire une nomenclature de sensibilité propre à la défense nationale d'un pays (politique de labélisation de la défense nationale dudit pays), etc...

Par exemple, lorsque la politique de labélisation P1, P2 est définie par la norme OTAN STANAG 4774, les labels L associés aux données D sont choisis, par exemple, parmi NATO Restricted, NATO confidential, NATO Secret, Cosmic Top Secret (du moins sensible au plus sensible).

Par exemple, lorsque la politique de labélisation P1, P2 est définie par une norme propre à la défense nationale d'un pays, par exemple par une norme relative à la défense nationale Française, les labels L associés aux données D sont choisis, par exemple, parmi non protégé, Diffusion restreinte, Secret, Très secret (du moins sensible au plus sensible).

A titre d'exemple, la première politique de labélisation P1 est ici définie par la norme OTAN STANAG 4774 et la deuxième politique de labélisation P2 est ici définie par la norme de labélisation propre à la défense nationale d'un pays, par exemple une politique de labélisation propre à la défense nationale Française.

Comme illustré sur la figure 1, le dispositif électronique d'interface 10 comprend une première unité d'interface 16, une deuxième unité d'interface 18 et une unité de transposition 20.

La première unité d'interface 16 est configurée pour être connectée au premier réseau 12 et la deuxième unité d'interface 18 est configurée pour être connectée au deuxième réseau 14. Par connecté au premier réseau 12 et connecté au deuxième réseau 14, on entend ici que la première unité d'interface 16 est configurée pour échanger des données D avec le première réseau 12 et que la deuxième unité d'interface 18 est configurée pour échanger des données D avec le deuxième réseau 14.

Comme illustré sur la figure 1, la première unité d'interface 16 comprend un premier module de filtrage 22. Dans un mode de réalisation non illustré, la première unité d'interface 16 comprend une pluralité de premiers modules de filtrage 22.

Le premier module de filtrage 22 est configuré pour filtrer des données D en fonction de règles de filtrage R1 définies selon la première politique de labélisation de donnée. De telles règles de filtrage R1 comprennent par exemple une liste de labels L autorisés et/ou une liste de labels L non-autorisés, les labels L étant exprimés selon la première politique de labélisation de données P1.

Le premier module de filtrage 22 est par exemple configuré pour bloquer une donnée D si le label L associé à la donnée D (ou en d'autres termes le label L de la donnée labélisée DL) n'est pas conforme aux règles de filtrage R1 du premier module de filtrage 22. Le premier module de filtrage 22 est alors par exemple en outre configuré pour laisser transiter les données qu'il ne bloque pas.

Par exemple, lorsque les règles de filtrage R1 comprennent une liste de labels L autorisés et/ou une liste de labels L non-autorisés, le premier module de filtrage 22 est configuré pour bloquer une donnée D si le label L associé à la donnée D n'est pas compris dans la listes des labels autorisés et/ou si le label L associé à la donnée D est compris dans la listes des labels non-autorisés.

Le premier module de filtrage 22 est par exemple configuré pour filtrer des données depuis le premier réseau 12 vers l'unité de transposition 20 et/ou depuis l'unité de transposition 20 vers le premier réseau 12.

On comprendra alors que lorsque le premier module de filtrage 22 est configuré pour filtrer des données depuis le premier réseau 12 vers l'unité de transposition 20 et depuis l'unité de transposition 20 vers le premier réseau 12, le premier module de filtrage 22 est configuré pour filtrer à la fois les données D entrant dans le dispositif d'interface 10 par la première unité d'interface 16 mais aussi les données sortant du dispositif d'interface 10 par la première unité d'interface 16.

Par ailleurs lorsque le premier module de filtrage 22 est configuré pour filtrer des données depuis le premier réseau 12 vers l'unité de transposition 20 et depuis l'unité de transposition 20 vers le premier réseau 12, les règles de filtrage R1 du premier module de filtrage 22 comprennent par exemple un premier jeu J1R1 de règles de filtrage définies selon la première politique de labélisation et un deuxième jeu J2R1 de règles de filtrage définies selon la première politique de labélisation. Lesdits premiers J1R1 et deuxième J2R1 jeux de règles de filtrage sont de préférence différents.

Le premier module de filtrage 22 est alors configuré pour filtrer des données D depuis le premier réseau 12 vers l'unité de transposition 20 en fonction du premier jeu de règles de filtrage J1R1 définies selon la première politique de labélisation, et pour filtrer des données D depuis l'unité de transposition 20 vers le premier réseau 12 en fonction du deuxième jeu de règles de filtrage J2R1 définies selon la première politique de labélisation.

Dans le mode de réalisation non illustré selon lequel la première unité d'interface 16 comprend une pluralité de premiers modules de filtrage 22, chaque premier module de filtrage 22 est configuré pour filtrer des données D en fonction de règles de filtrage R1 définies selon la première politique de labellisation de données P1, les règles de filtrage R1 de chaque premier module de filtrage 22 étant par exemple différentes. Par exemple, chaque premier module de filtrage 22 est configuré pour être connecté à une portion respective du premier réseau 12, les portions respectives du premier réseau 12 étant par exemple destinées au transit et/ou au stockage de données D de sensibilités différentes.

Comme illustré sur la figure 1, la deuxième unité d'interface 18 comprend un deuxième module de filtrage 24. Par exemple, et comme illustré sur la figure 1, la deuxième unité d'interface 18 comprend une pluralité de deuxièmes modules de filtrage 24.

Le deuxième module de filtrage 24 est configuré pour filtrer des données D en fonction de règles de filtrage R2 définies selon la deuxième politique de labélisation de donnée P2. De telles règles de filtrage R2 comprennent par exemple une liste de labels L autorisés et/ou une liste de labels L non-autorisés, les labels L étant exprimés selon la deuxième politique de labélisation de données P2.

De façon analogue au premier module de filtrage 22, le deuxième module de filtrage 24 est par exemple configuré pour bloquer une donnée D si le label L associé à la donnée D (ou en d'autres termes le label L de la donnée labélisée DL) n'est pas conforme aux règles de filtrage R2 du deuxième module de filtrage 24. Le deuxième module de filtrage 24 est alors par exemple en outre configuré pour laisser transiter les données qu'il ne bloque pas.

Par exemple, lorsque les règles de filtrage R2 comprennent une liste de labels L autorisés et/ou une liste de labels L non-autorisés, le deuxième module de filtrage 24 est configuré pour bloquer une donnée D si le label L associé à la donnée D n'est pas compris dans la listes des labels autorisés et/ou si le label L associé à la donnée D est compris dans la listes des labels non-autorisés.

Le deuxième module de filtrage 24 est par exemple configuré pour filtrer des données depuis l'unité de transposition 20 vers le deuxième réseau 14 et/ou depuis deuxième réseau 14 vers l'unité de transposition 20.

On comprendra alors que lorsque le deuxième module de filtrage 24 est configuré pour filtrer des données depuis l'unité de transposition 20 vers le deuxième réseau 14 et depuis le deuxième réseau 14 vers l'unité de transposition 20, le deuxième module de filtrage 24 est configuré pour filtrer à la fois les données D entrant dans le dispositif d'interface 10 par la deuxième unité d'interface 18 mais aussi les données sortant du dispositif d'interface 10 par la deuxième unité d'interface 18.

Par ailleurs et de façon analogue au premier module de filtrage 22, lorsque le deuxième module de filtrage 24 est configuré pour filtrer des données depuis l'unité de transposition 20 vers le deuxième réseau 14 et depuis le deuxième réseau 14 vers l'unité de transposition 20, les règles de filtrage R2 du deuxième module de filtrage 24 comprennent par exemple un premier jeu J1R2 de règles de filtrage définies selon la deuxième politique de labélisation et un deuxième jeu J2R2 de règles de filtrage définies selon la deuxième politique de labélisation. Lesdits premiers J1R2 et deuxième J2R2 jeux de règles de filtrage sont de préférence différents.

Le deuxième module de filtrage 24 est alors configuré pour filtrer des données D depuis l'unité de transposition 20 vers le deuxième réseau 14 en fonction du premier jeu de règles de filtrage J1R2 définies selon la deuxième politique de labélisation, et pour filtrer des données D depuis le deuxième réseau 14 vers l'unité de transposition 20 en fonction du deuxième jeu de règles de filtrage J2R2 définies selon la deuxième politique de labélisation.

Dans le mode de réalisation illustré sur la figure 1 selon lequel la deuxième unité d'interface 18 comprend une pluralité de deuxièmes modules de filtrage 24, chaque deuxième module de filtrage 24 est configuré pour filtrer des données D en fonction de règles de filtrage R2 définies selon la deuxième politique de labellisation de données P1, les règles de filtrage R2 de chaque deuxième module de filtrage 24 étant par exemple différentes. Par exemple, chaque deuxième module de filtrage 24 est configuré pour être connecté à une portion respective du deuxième réseau 14, les portions respectives du deuxième réseau 14 étant par exemple destinées au transit et/ou au stockage de données D de sensibilités différentes.

L'unité de transposition 20 est connectée à la première unité d'interface 16 et à la deuxième unité d'interface 18. En particulier, l'unité de transposition 20 est connectée à la première unité d'interface 16 et à la deuxième unité d'interface 18 de sorte à pouvoir pour échanger des données D, en particulier des données labélisées DL, avec la première unité d'interface 16 et avec la deuxième unité d'interface 18.

Comme visible sur la figure 1, l'unité de transposition 20 comprend un module de transposition 26. Par ailleurs, l'unité de transposition 20 comprend en outre par exemple un module de signature 28, un module de chiffrement 30 et/ou un module de déchiffrement 32.

Le module de transposition 26 est configurée pour transposer le label L associé aux données D transitant par l'unité de transposition 20 entre la première unité d'interface 12 et la deuxième unité d'interface 14, de l'une de la première P1 ou deuxième P2 politique de labellisation à l'autre de la première P1 ou deuxième P2 politique de labélisation.

En particulier, le module de transposition 26 est configuré pour transposer le label L associé aux données D circulant par l'unité de transposition 20 depuis la première unité d'interface 12 vers la deuxième unité d'interface 14 de la première politique de labélisation P1 vers la deuxième politique de labélisation P2.

Par ailleurs, et par exemple, le module de transposition 26 est configuré pour transposer le label L associé aux données D circulant par l'unité de transposition 20 depuis la deuxième unité d'interface 14 vers la première unité d'interface 12 de la deuxième politique de labélisation P2 vers la première politique de labélisation P1.

Par exemple, le module de transposition transpose le label de l'une de la première P1 ou deuxième P2 politique de labellisation à l'autre de la première P1 ou deuxième P2 politique de labélisation en suivant des règles de transposition RT. Les règles de transposition sont par exemple agencées sous la forme d'au moins un tableau de correspondance entre les labels selon la première P1 et la deuxième P2 politique de labélisation.

Le module de signature 28 est par exemple configuré pour apposer une signature S à la donnée et/ou au label transposé L associé à la donnée D, c'est-à-dire au label ayant été transposé de l'une de la première P1 ou deuxième P2 politique de labélisation à l'autre de la première P1 ou deuxième P2 politique de labélisation. Par exemple, module de signature 28 est configuré pour apposer une signature à la donnée labélisée DL dont le label L a été transposé.

Le module de signature 28 est par exemple configuré pour générer une signature en fonction de la donnée D labélisée et/ou du label transposé L associée à cette donnée de sorte à garantir l'intégrité de l'association du label transposé L à la donnée labélisée D.

Le module de chiffrement 30 est configuré pour chiffrer la donnée D pour laquelle le label a été transposée et/ou pour chiffrer le label L associé à une telle donnée D. Le module de chiffrement 30 est par exemple configuré pour chiffrer ladite donnée D ainsi que le label L associé à ladite donnée D. En d'autre termes, le module de chiffrement 30 est par exemple configuré pour chiffrer la donnée labélisée DL.

A cet effet, le module de chiffrement 30 est par exemple configuré pour chiffrer la donnée D à l'aide d'une clé symétrique et pour chiffrer la clé de de chiffrement de ladite donnée D à l'aide d'une clé asymétrique obtenue en fonction du label L associé à la donnée D. Le module de chiffrement 30 est alors par exemple, et en d'autres termes, configuré pour chiffrer le label L en une clé de chiffrement de la clé symétrique de chiffrement de la donnée D.

Dans un mode de réalisation particulier, le module de chiffrement 30 est configuré pour ne chiffrer que le label L associé à la donnée D pour laquelle le label a été transposé. Ceci est par exemple le cas lorsque la donnée D est chiffrée et que seule la clé asymétrique obtenue en fonction du label L est déchiffrée par le module de déchiffrement 32 préalablement à la transposition du label L, comme cela sera présenté plus en détails ultérieurement.

Le module de chiffrement 30 est par exemple configuré pour appliquer un chiffrement de type ABE (acronyme anglais pour « *Attribute Based Encryption* ») pour chiffrer la donnée D et/ou le label L associé à la donnée.

Le module de déchiffrement 32 est configuré pour déchiffrer la donnée D pour laquelle le module de transposition 26 est configuré à transposer le label L et/ou pour déchiffrer le label L associé à ladite donnée. Par exemple, le module de déchiffrement 32 est configuré pour déchiffrer ladite donnée labélisée DL avant sa transposition par le module de transposition 26.

A cet effet, le module de déchiffrement 32 est par exemple configuré pour déchiffrer la donnée D à l'aide d'une clé symétrique et pour déchiffrer la clé de de chiffrement de ladite donnée D à l'aide d'une clé asymétrique obtenue en fonction du label L associé à la donnée D. Le module de déchiffrement 32 est alors par exemple, et en d'autres termes, configuré pour chiffrer le label L en une clé de chiffrement de la clé symétrique de chiffrement de la donnée D.

Dans un mode de réalisation particulier, le module de déchiffrement 32 est configuré pour ne déchiffrer que le label L associé à la donnée D dont le label est à transposer par le module de transposition 26. Ceci est par exemple le cas lorsque la donnée D est destinée à rester chiffrée dans le dispositif électronique d'interface 10, le module de déchiffrement ne déchiffrant alors que la clé asymétrique de chiffrement, obtenue en fonction du label L, de la clé de chiffrement symétrique de la donnée D. Le module de déchiffrement 32 est par exemple configuré pour déchiffrer un chiffrement de type ABE de la donnée D et/ou du label L associé à la donnée.

Dans un exemple particulier (non représenté), le dispositif électronique d'interface 10 comprend une unité de traitement d'informations formée par exemple d'une mémoire électronique associée à un processeur.

Dans un tel exemple, la première unité d'interface 16, la deuxième unité d'interface 18 et l'unité de transposition 20 sont chacune réalisées sous forme d'un logiciel exécutable par le processeur. La mémoire est alors apte à stocker un premier logiciel d'interface, un deuxième logiciel d'interface et un logiciel de transposition. Le processeur de l'unité de traitement d'informations est alors apte à exécuter le premier logiciel d'interface, le deuxième logiciel d'interface et le logiciel de transposition.

Selon une autre variante, la première unité d'interface 16, la deuxième unité d'interface 18 et l'unité de transposition 20 sont réalisées chacune sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit).*

Lorsque la première unité d'interface 16, la deuxième unité d'interface 18 et l'unité de transposition 20 sont réalisées sous forme d'un ou plusieurs logiciels, c'est-à-dire sous forme d'un programme d'ordinateur, il sont en outre aptes à être enregistrés sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est une mémoire ROM, une mémoire RAM, tout type de mémoire non volatile (par exemple EPROM, EEPROM, FLASH, NVRAM). Sur le support lisible est alors mémorisé un programme d'ordinateur comprenant des instructions logicielles.

Un procédé 100 de filtrage de données, entre un premier réseau 12, obéissant à une première politique de labellisation de données P1, et un deuxième réseau 14, obéissant à une deuxième politique de labellisation de données P2, mis en oeuvre par un dispositif électronique d'interface 10 tel que présenté plus haut, va maintenant être décrit.

Ce procédé 100 comprend une première étape de filtrage 110, une étape de transposition 120 ainsi qu'une deuxième étape de filtrage 130.

Lors de la première étape de filtrage 110, le premier module de filtrage 22 de la première unité d'interface 16 filtre des données en fonction de règles de filtrage R1 définies selon la première politique P1 de labellisation de données.

Le premier module de filtrage 22 filtre par exemple des données depuis le premier réseau 12 vers l'unité de transposition 20.

Lors de l'étape de transposition 120, le module de transposition 26 de l'unité de transposition 20 transpose le label associé aux données D transitant par l'unité de transposition 20 entre la première 16 et la deuxième 18 unités d'interface de l'une de la première P1 ou deuxième P2 politique de labellisation à l'autre de la première P1 ou deuxième P2 politique de labélisation.

Par exemple, le module de transposition 26 transpose le label L des données D filtrées par le premier module de filtrage 22 de la première politique de labélisation P1 à la deuxième politique de labélisation P2.

Lors de la deuxième étape de filtrage 130, le deuxième module de filtrage 24 de la deuxième unité d'interface 18 filtre des données D en fonction de règles de filtrage définies selon la deuxième politique P2 de labélisation de données.

Le deuxième module de filtrage 24 filtre par exemple des données depuis l'unité de transposition 20 vers le deuxième réseau 14.

Les données D transitant par le dispositif électronique d'interface 10 sont alors par exemple filtrées par le premier module de filtrage 22 lors de la première étape de filtrage 110, les labels L associés aux données D filtrées sont transposés par le module de transposition 26 de l'unité de transposition 20 de la première P1 politique de labélisation de données à la deuxième P2 politique de labélisation de données lors de l'étape de transposition et les données D dont les labels ont été transposés sont filtrées par le deuxième module de filtrage 24 lors de la deuxième étape de filtrage 130.

Par ailleurs, et en complément facultatif, les données D transitant par le dispositif électronique d'interface 10 sont filtrées par le deuxième module de filtrage 22 lors de la première étape de filtrage 110, les labels L associés aux données D ainsi filtrées sont transposés par le module de transposition 26 de l'unité de transposition 20 de la deuxième P2 politique de labélisation de données à la première P1 politique de labélisation de données lors de l'étape de transposition et les données D dont les labels ont été transposés sont filtrées par le premier module de filtrage 22 lors de la deuxième étape de filtrage 130.

Comme vu plus haut, l'utilisation d'une dispositif électronique d'interface 10 comprenant une première unité d'interface 16, une deuxième unité d'interface 18 et une unité de transposition 20 telles que présentées plus haut est particulièrement avantageuse pour améliorer le contrôle de la diffusion de données D potentiellement sensibles.

L'utilisation d'un premier 22 et d'un deuxième 24 modules de filtrage configurés pour bloquer des données D si le label L associé à une donnée D n'est pas conforme à des règles de filtrage contribue à améliorer encore le contrôle de la diffusion de données D potentiellement sensibles.

L'utilisation d'un premier module de filtrage 22 configuré pour filtrer des données D depuis le premier réseau 12 vers l'unité de transposition 20 et/ou depuis l'unité de transposition 20 vers le premier réseau 12, et d'un deuxième module de filtrage 24 configuré pour filtrer des données D depuis l'unité de transposition 20 vers le deuxième réseau 14 et/ou depuis deuxième réseau 14 vers l'unité de transposition 20 est particulièrement avantageuse pour filtrer les données indépendamment du sens de circulation des données dans le dispositif 10, l'utilisation de jeux de filtrage distincts en fonction du sens de circulation des données dans les première 16 et deuxième 18 unités d'interface étant particulièrement avantageuse pour améliorer la versatilité du dispositif d'interface 10.

L'utilisation d'une unité de transposition 20 comprenant un module de signature 28 et/ou un module de chiffrement 30 et/ou un module de déchiffrement 32 est particulièrement avantageuse pour assurer l'intégrité des données transitant par le dispositif d'interface 10.

L'utilisation d'un première unité d'interface 16 comprenant une pluralité de premiers modules de filtrage 22 et/ou d'une deuxième unité d'interface 18 comprenant une pluralité de deuxièmes modules de filtrage 24 est particulièrement avantageuse pour assurer un filtrage approprié à des portions spécifiques du premier 12 et/ou du deuxième 14 réseau, rendant ainsi le dispositif d'interface 10 particulièrement efficace et versatile.

## Revendications

1. Dispositif électronique d'interface (10) entre un premier réseau (12), obéissant à une première politique de labellisation de données (P1), et un deuxième réseau (12), obéissant à une deuxième politique de labellisation de données (P2), le dispositif (10) comprenant :
- une première unité d'interface (16), configurée pour être connectée au premier réseau (12), la première unité d'interface (16) comprenant un premier module de filtrage (22), configuré pour filtrer des données (D) en fonction de règles de filtrage (R1) définies selon la première politique de labellisation de données ;
- une deuxième unité d'interface (18), configurée pour être connectée au deuxième réseau (14), la deuxième unité d'interface (18) comprenant un deuxième module de filtrage (24) configuré pour filtrer des données (D) en fonction de règles de filtrage (R2) définies selon la deuxième politique de labellisation de données ; et
- une unité de transposition (20), connectée à la première unité d'interface (16) et à la deuxième unité d'interface (18), l'unité de transposition (20) comprenant un module de transposition (26) étant configuré pour transposer un label (L) associé aux données (D) transitant par l'unité de transposition (20) entre la première (16) et la deuxième (18) unités d'interface, de l'une de la première (P1) ou deuxième (P2) politique de labellisation à l'autre de la première (P1) ou deuxième (P2) politique de labélisation.

2. Dispositif électronique d'interface (10) selon la revendication 1, dans lequel le premier module de filtrage (22) est configuré pour bloquer une donnée (D) si le label (L) associé à la donnée (D) n'est pas conforme aux règles de filtrage (R1) définies selon la première politique de labellisation de données et dans lequel le deuxième module de filtrage (24) est configuré pour bloquer une donnée (D) si le label (L) associé à la donnée (D) n'est pas conforme aux règles de filtrage (R2) définies selon la deuxième politique de labellisation de données .

3. Dispositif électronique d'interface (10) selon la revendication 1 ou 2, dans lequel le premier module de filtrage (22) est configuré pour filtrer des données (D) depuis le premier réseau (12) vers l'unité de transposition (20) et/ou depuis l'unité de transposition (20) vers le premier réseau (12), et dans lequel le deuxième module de filtrage (24) est configuré pour filtrer des données (D) depuis l'unité de transposition (20) vers le deuxième réseau (14) et/ou depuis deuxième réseau (14) vers l'unité de transposition (20).

4. Dispositif électronique d'interface (10) selon la revendication 3, dans lequel le premier module de filtrage (22) est configuré pour filtrer des données (D) depuis le premier réseau (12) vers l'unité de transposition (20) en fonction d'un premier jeu (J1R1) de règles de filtrage définies selon la première politique de labélisation, et pour filtrer des données depuis l'unité de transposition (20) vers le premier réseau (12) en fonction d'un deuxième jeu (J2R1) de règles de filtrage définies selon la première politique de labélisation, lesdits premier (J1R1) et deuxième jeux (J2R1) de règles de filtrage étant différents,
le deuxième module de filtrage (24) étant configuré pour filtrer des données (D) depuis l'unité de transposition (20) vers le deuxième réseau (14) en fonction d'un premier jeu (J1R2) de règles de filtrage définies selon la deuxième politique de labélisation, et pour filtrer des données (D) depuis le deuxième réseau (14) vers l'unité de transposition (20) en fonction d'un deuxième jeu de règles de filtrage (J2R2) définies selon la deuxième politique de labélisation, lesdits premier (J1R2) et deuxième jeux de règles (J2R2) de filtrage étant différents.

5. Dispositif électronique d'interface (10) selon l'une quelconque des revendications précédentes, dans lequel l'unité de transposition (20) comprend en outre un module de signature (28), configuré pour apposer une signature (S) à la donnée et/ou au label (L) transposé associé à la donnée (D).

6. Dispositif électronique d'interface (10) selon l'une quelconque des revendications précédentes, dans lequel l'unité de transposition (20) comprend en outre un module de chiffrement (30), configuré pour chiffrer la donnée (D) pour laquelle le label (L) a été transposé.

7. Dispositif électronique d'interface (10) selon l'une quelconque des revendications précédentes, dans lequel l'unité de transposition (20) comprend en outre un module de déchiffrement (32), configuré pour déchiffrer la donnée (D) pour laquelle le module de transposition (26) est configuré à transposer le label (L) et/ou pour déchiffrer le label (L) associé à ladite donnée (D).

8. Dispositif électronique d'interface (10) selon l'une quelconque des revendications précédentes, dans lequel la première unité d'interface (16) comprend une pluralité de premiers modules de filtrage (22) et/ou dans lequel la deuxième unité d'interface (18) comprend une pluralité de deuxièmes modules de filtrage (24).

9. Procédé de filtrage de données (100), entre un premier réseau (12), obéissant à une première politique de labellisation de données (P1), et un deuxième réseau (14), obéissant à une deuxième politique de labellisation de données (P2), le procédé (100) étant mis en oeuvre par un dispositif d'interface (10) selon l'une quelconque des revendications 1 à 8 et comprenant les étapes suivantes :
- filtrage (110), par le premier module de filtrage (22) de la première unité d'interface (16), de données (D) en fonction de règles de filtrage (R1) définies selon la première politique de labellisation de données ;
- filtrage (130), par le deuxième modules de filtrage (24) de la deuxième unité d'interface (18), de données en fonction de règles de filtrage (R2) définies selon la deuxième politique de labellisation de données ; et
- transposition (120), par le module de transposition (26) de l'unité de transposition (20), du label (L) associé aux données (D) transitant par l'unité de transposition (20) entre la première (16) et la deuxième (18) unité d'interface, de l'une de la première (P1) ou deuxième (P2) politique de labellisation à l'autre de la première (P1) ou deuxième (P2) politique de labélisation.

10. Programme d'ordinateur comportant des instructions logicielles qui, lorsqu'elles sont exécutées par un ordinateur, mettent en oeuvre un procédé selon la revendication 9.
